Europäisches Patentamt

European Patent Office

Office européen des brevets

(11) Veröffentlichungsnummer: **0 118 823**
A2

(12) # EUROPÄISCHE PATENTANMELDUNG

(21) Anmeldenummer: 84102060.5

(22) Anmeldetag: 28.02.84

(51) Int. Cl.³: **G 01 N 21/49**
**G 01 J 1/16**

(30) Priorität: 04.03.83 DE 3307627

(43) Veröffentlichungstag der Anmeldung:
19.09.84 Patentblatt 84/38

(84) Benannte Vertragsstaaten:
BE CH DE FR IT LI NL SE

(71) Anmelder: Merck Patent Gesellschaft mit beschränkter Haftung
Frankfurter Strasse 250
D-6100 Darmstadt(DE)

(72) Erfinder: Steiner, Rudolf, Dr.
Heinestrasse 15
D-4040 Neuss 1(DE)

(72) Erfinder: Kaufmann, Raimund, Dr.
Florastrasse 14
D-4005 Meerbusch I.(DE)

(54) Verfahren und Vorrichtung zur Bestimmung von Trübungen in Flüssigkeiten.

(57) Die Erfindung betrifft ein Verfahren zur Bestimmung von Trübungen in Flüssigkeiten durch Bestrahlen der Flüssigkeit mit elektromagnetischer Strahlung und Messung der Streulichtintensität sowie eine Vorrichtung zur Durchführung dieses Verfahrens. Das Verfahren ist dadurch gekennzeichnet, daß man die Streulichtintensitäten aus einer Meß- und Referenzzelle alternierend und mit umgekehrten Vorzeichen in ein Rechteck-Analogsignal der Frequenz f zusammenfaßt, mit der n-fachen Frequenz von f abtastet und die Differenz der Produktsummen von Stüzzellen dieser Zeitreihe im Takt der Frequenz f und dem Zeitabstand T bildet. Mit dem neuen Verfahren werden die durch Eigentrübungen der zu untersuchenden Flüssigkeiten entstehenden Fehler ausgeschaltet, das Signal/Rausch-Verhältnis extrem verbessert und damit die Nachweisempfindlichkeit gesteigert.

EP 0 118 823 A2

Merck Patent Gesellschaft
mit beschränkter Haftung
D a r m s t a d t

Verfahren und Vorrichtung zur Bestimmung von
Trübungen in Flüssigkeiten

Die Erfindung betrifft ein Verfahren und eine Vorrichtung zur Bestimmung von Trübungen in Flüssigkeiten, insbesondere nephelometrische Bestimmungen von biologischen Komponenten.

Optische Methoden zur Bestimmung von Antigen-Antikörper-Reaktionen oder zum Nachweis und zur Charakterisierung von Mikroorganismen werden seit langem mit Erfolg eingesetzt. Die z.B. auf Transmission, Absorption, Turbidimetrie, Nephelometrie oder auch Laser-Doppler-Spektroskopie basierenden Methoden haben den großen Vorteil, einfach und kostengünstig zu sein. Sie sind jedoch, teilweise bedingt durch ihre gerätetechnischen Ausführungen, in ihrer Empfindlichkeit begrenzt, vor allem in Gegenwart von hohen Serumkonzentrationen, wie sie insbesondere bei immunologischen Bestimmungen vorkommen. Spezifische Aussagen unterhalb einer Antigen-Antikörper-Konzentration von 1 µg/ml sind mit fast allen Geräten kaum möglich. Die Nachweisgrenze für Mikroorganismen liegt mit modernen Meßverfahren bei etwa $10^6$ Keimen/ml.

Aus der DE-OS 24 09 273 ist eine nephelometrische Methode zur Bestimmung von Antigen-Antikörper-Reaktionen bekannt, wobei die Probelösung mit Laserlicht durchstrahlt und das noch vorwärts gestreute Licht mit einem Photodetektor gemessen und ausgewertet wird. In der DE-PS 29 20 276 ist ein nephelometrisches Immunbestimmungsverfahren beschrieben, mit dem die wahre Antigenkonzentration durch Vergleich zweier an unterschiedlichen Winkeln zum einfallenden Licht gemessenen Streulichtintensitäten ermittelt werden kann.

In allen bisher beschriebenen nephelometrischen Verfahren und Vorrichtungen wird lediglich eine Meßküvette verwendet. Damit sind jedoch keine spezifischen Aussagen bei geringen Antigenkonzentrationen möglich, da die optischen Eigenschaften der zu messenden Seren nicht berücksichtigt werden können. Das Meßergebnis wird mit einer Standardkurve verglichen und interpretiert. Aus den in der DE-OS 24 09 273 vorliegenden Ergebnissen ergibt sich, daß selbst schon unterschiedliche Antiseren ein Meßergebnis um 100% verfälschen können. Auch die dort angegebene relativ hohe Empfindlichkeit von 0,01 µg/ml läßt sich nur bei hohen Verdünnungen der Seren erreichen. Ein Vergleich einer Messung aus Patientenserum mit einer Standardkurve aus einzelnen Verdünnungsschritten erscheint danach äußerst problematisch.

Der Erfindung liegt die Aufgabe zugrunde, ein Verfahren und eine Vorrichtung zur Bestimmung von Trübungen in Flüssigkeiten zu schaffen, womit die durch Eigentrübungen der zu untersuchenden Flüssigkeiten entstehenden Fehler ausgeschaltet, das Signal/Rausch-Verhältnis extrem verbessert und damit die Nachweisempfindlichkeit gegenüber dem Stand der Technik gesteigert wird.

Gegenstand der Erfindung ist ein Verfahren zur Bestimmung von Trübungen in Flüssigkeiten durch Bestrahlen der Flüssigkeit mit elektromagnetischer Strahlung und Messung

GSPHA33 C-e

der Streulichtintensität, das dadurch gekennzeichnet ist, daß man die Streulichtintensitäten aus einer Meß- und Referenzzelle alternierend und mit umgekehrten Vorzeichen in ein Rechteck-Analogsignal der Frequenz f zusammenfaßt, mit der n-fachen Frequenz von f abtastet und die Differenz der Produktsummen von entsprechenden Stützzellen dieser Zeitreihe im Takt f und dem Zeitabstand T bildet. n ist eine ganze Zahl von 1 bis 100, vorzugsweise 2. Die Frequenz f sollte zwischen 100 bis 1000 liegen, vorzugsweise bei etwa 500 Hz.

Ein weiterer Gegenstand der Erfindung ist eine Vorrichtung zur Bestimmung von Trübungen in Flüssigkeiten, die gekennzeichnet ist durch eine Lichtquelle (1), die mittels eines Strahlenteilers (2) und eines Prismas (3) zwei identische Teilstrahlen erzeugt, die durch die Sammeloptik (4a, 4b) gebündelt und auf eine Meß- und Referenzzelle (5, 6) projiziert werden und zwei Photodetektoreinrichtungen (7a, 7b), die die von der Meß- bzw. Referenzzelle (5, 6) ausgehenden Streulichtintensitäten unter einem Winkel zum einfallenden Licht messen, wobei die Signale der Photodetektoreinrichtungen (7a, 7b) über einen Analogschalter (9) einem Differenzverstärker (10) zugeführt und in einer Einrichtung (11) ausgewertet werden.

Überraschenderweise ermöglicht das erfindungsgemäße Verfahren die quantitative Bestimmung von z.B. wahren Antigen- und Bakterienkonzentrationen, die mindestens um eine Größenordnung empfindlicher sind als Messungen mit konventionellen Vorrichtungen.

Antigen-Antikörper-Reaktionen durchlaufen mit zunehmender Antigen-Konzentration hinsichtlich der auftretenden Trübung bekanntlich ein Reaktionsmaximum (Heidelberger-Kurve). Dadurch kann bei einzelner Messung das Resultat nicht einer einzigen Antigenkonzentration zugeordnet

- . -

werden. Das erfindungsgemäße Verfahren bietet jedoch die Möglichkeit zu entscheiden, welcher wahren Antigen-Konzentration der jeweilige Meßwert entspricht, d. h. auf welcher Seite des Maximums der Heidelberger-Kurve der richtige Analysenwert zu suchen ist. Gibt man z.B. in die Meß- und Referenzzelle gleiche Mengen Antikörper, in die Referenzzelle jedoch nur die Hälfte der Menge an Antigen als in die Meßzelle, so wird die Produktsumme positiv für den Fall, daß man sich auf dem ansteigenden Ast der Heidelberger-Kurve befindet und negativ für den Fall, daß man sich auf dem abfallenden Ast der Reaktionskurve befindet. Eine weitere Möglichkeit zur Bestimmung der wahren Antigenkonzentration besteht darin, Meß- und Referenzzelle mit der gleichen Menge Antigen zu beschicken, die Antikörperkonzentration in der Referenzzelle jedoch gegenüber der in der Meßzelle zu erhöhen. Hierdurch läßt sich auch eine Unterscheidung zwischen Antigen- und Antikörperüberschuß durchführen.

Zum Nachweis und zur Charakterisierung von Mikroorganismen ist bei Impedanzmessungen oder turbidimetrischen bzw. nephelometrischen Verfahren eine minimale Keimzahl von etwa $10^6$ Keimen/ml notwendig, um ein ausreichendes Meßsignal zu erhalten. Bei Proben mit einem geringeren Keimgehalt müssen die Mikroorganismen vor dem photometrischen Nachweis in einer geeigneten Nährbouillon auf eine entsprechende Keimzahl vermehrt werden.

Bei der Empflindlichkeitsprüfung von Bakterien gegen Antibiotika im Reihenverdünnungstest bedarf es bei dem üblicherweise verwendeten Inoculum von $10^3$-$10^4$ Keimen/ml Analysenzeiten von mehreren Stunden, bis die nicht durch das Antibiotikum gehemmten Bakterien sich auf eine photometrisch sicher nachweisbare Keimzahl von $10^6$ - $10^7$ Bakterien/ml vermehrt haben.

- 6 -

Die erfindungsgemäße Vorrichtung mit einer Meß- und Referenzzelle ermöglicht durch Elimination unspezifischer Parameter in der Probe, z.B. geringen Opaleszenzen, eine sichere Erfassung von $10^4$ Bakterien/ml. Infolge dieser hohen Nachweisempfindlichkeit ist beispielsweise bei einem Empfindlichkeitstest von Bakterien gegen Antibiotika nach einer Analysenzeit von 0,5 - 1,5 Stunden eine sichere Aussage über die minimale Hemmkonzentration des Antibiotikums möglich. Die Verkürzung der Analysenzeit ist für die Praxis von größter Bedeutung, da eine sichere Antibiotikumtherapie früher eingeleitet, bzw. in schweren klinischen Fällen eine bereits begonnene Antibiotikumtherapie kurzfristig korrigiert werden kann.

Bei einer Sterilitätsprüfung von Proben durch Zugabe einer bestimmten Probenmenge zu einer Nährbouillon, kann mit Hilfe der erfindungsgemäßen Vorrichtung meist bereits nach einer Bebrütungszeit von 4 Stunden eine Aussage über das Vorliegen vom Keimen gemacht werden. Durch seine hohe Nachweisempfindlichkeit eignet sich das Verfahren somit hervorragend zur raschen Sterilitätsprüfung von Produktionschargen. Bei konventionellen Untersuchungsverfahren werden zu einem sicheren Keimnachweis mindestens 8 - 12 Stunden benötigt, so daß das Untersuchungsergebnis erst am darauffolgenden Arbeitstag vorliegt. Zur Sterilitätsprüfung von Proben hat es sich als vorteilhaft erwiesen, wenn Meß- und Referenzzelle unabhängig voneinander thermostatisierbar sind.

Der Aufbau der erfindungsgemäßen Vorrichtung ist in der Abb. dargestellt. Ein von einem Laser (1) erzeugter Laserstrahl wird durch einen Strahlteiler (2) in zwei Teilstrahlen gleicher Intensität aufgespalten und durch ein Umlenkprisma (3) parallel gerichtet. Die Linsen (4a, 4b) fokussieren das Laserlicht in eine Referenzküvette (5) und eine Meßküvette (6). Der durchgehende Strahl wird durch je eine Lichtfalle (13a, 13b) gestoppt. Pro Küvette werden mindestens zwei hochempfindliche Photodetektoreinrichtungen (Si-PIN Dioden) (7a, 7b) in der vertikalen Ebene und unter gleichem Raumwinkel, vorzugsweise symmetrisch zum Laserstrahl eingesetzt. Das Sichtfeld eines jeden Detektors ist durch 2 Blenden (12a, 12b) von 0.7 mm Durchmesser so eingestellt, daß das Streulicht des Laserstrahls beim Durchgang durch die Küvette (z.B. 10 mm Schichtdicke) auf einer Länge von 6 mm erfaßt wird, aber das Streulicht von der Küvettenwand beim Ein- und Austritt des Laserstrahls ausgeblendet bleibt. Daraus errechnet sich ein effektives Streuvolumen von 2,5 $mm^3$. Ein auf die Wellenlänge des Laserstrahls eingestelltes Interferenzfilter (14a, 14b), verhindert den Einfall unspezifischen Lichts auf den Detektor. Die Wahl der Detektoranordnung in der vertikalen Ebene erlaubt z.B. den Einsatz von Einmal-Mikroküvetten aus Kunststoff, so daß sich zeitraubende Reinigungsschritte erübrigen, wie sie für Photometerküvetten üblich sind.

Die Spannungsamplituden der Detektoren an der Meßzelle, $I_M(t)$, und der Referenzzelle, $I_R(t)$, werden durch je einen Instrumentenverstärker (8a, b) verstärkt und einem Analog-Schaltelement (9) zugeführt. Im Takt einer Clock (16) wird wechselweise einem Differenzverstärker (10) das Signal einer Zelle zugeleitet, während der andere Eingang auf Masse liegt. So entsteht ein Rechteck-Analogsignal (15), dessen positive Amplituden, $A_M(t)$, von der Meßzelle und die negativen Amplituden, $A_R(t)$, von der Referenzzelle herrühren. Erfindungsgemäß ist somit die Information aus beiden Zellen in einem Analogsignal verdichtet, das durch eine spezielle Auswerteeinheit (11) nur in dieser kondensierten Form einfach und sehr empfindlich ausgewertet werden kann.

Als Strahlungsquelle für kontinuierlich elektromagnetische Strahlung wird z.B. ein He-Ne-Laser (4 mW) mit einer Wellenlänge von 632,8 nm eingesetzt. Der Vorteil dieses Gaslasers ist die einfache Strahlführung, bedingt durch das parallele Lichtbündel, die Fokussierbarkeit und die Wellenlänge im roten Spektralbereich, bei der normalerweise keine Absorptionsbanden der zu untersuchenden Proben liegen. Der höhere Rauschanteil fällt nicht ins Gewicht, da im Auswerteverfahren der Rauschanteil statistisch gegen Null geht.

Der erfindungsgemäße Einsatz von Meß- bzw. Referenzküvette erlaubt empfindliche und spezifische Messungen, da z.B. unabhängig von den Streueigenschaften des Serums (z.B. lipämisches Serum) und des Untergrunds nur die relative Intensitätszunahme des Streulichts durch die ablaufende Reaktion ausgewertet wird.

Gemessen wird das Laserstreulicht in Vorwärtsrichtung in einem Winkelbereich von 10°-25°, vorzugsweise bei etwa 15°. Vorzugsweise werden die Streulichtintensitäten aus Meß- und Referenzzelle bei je zwei zum einfallenden Licht gleichen Winkeln von entgegengesetztem Vorzeichen gemessen.

Der Vorteil des Analogschalters (9) gegenüber sonst eingesetzten Strahlchoppern wirkt sich in doppelter Hinsicht aus: die Spannung eines Diodenpaars wird gegen einen definierten Nullpunkt gemessen, während beim Choppen des Strahls gegen den Dunkelstrom des zweiten Diodenpaars gemessen werden muß und beide Signale durchlaufen den gleichen Differenzverstärker (10) und werden somit identisch verstärkt.

Für die Meßgenauigkeit ist das Signal/Rausch-Verhältnis eines Meßverfahrens und der entsprechenden Meßanordnung von Bedeutung. Nephelometrische Messungen wurden bisher lediglich über die Amplitude des Analogsignals ausgewertet. Durch das starke Rauschen im Streulichtsignal und durch Schwankungen der Grundlinie ist die Empfindlichkeit und somit der sichere Nachweis einer Reaktion, besonders bei hoher Untergrundstreuung durch Serumkomponenten, sehr begrenzt.

Durch die erfindungsgemäße Vorrichtung und das damit durchführbare Verfahren wird das Signal/Rausch-Verhältnis so weit verbessert, daß selbst Informationen innerhalb der Rauschamplitude noch mit Sicherheit nachgewiesen werden können. Auch gegenüber einfachen statistischen Methoden wie Signalmittelung über einen längeren Zeitraum ist dieses Verfahren um den Faktor 2 bis 7 günstiger für die Rauschunterdrückung. Die Statistik entspricht der einer Korrelationsanalyse, doch wird keine aufwendige Korrelationsfunktion aufgestellt, sondern es genügen durch die Aufbereitung des Analogsignals in ein Rechtecksignal lediglich die Ermittlung zweier Werte und deren Verhältnis.

Die Clock (16), die den Analogschalter (9) steuert, triggert auch die Auswerteeinheit (11) mit der doppelten Frequenz 2f, und zwar so, daß jeweils ein Wert in der Mitte der Plateauphase (alternativ für Mess- und Referenzzelle) ausgewertet wird. Zu einem Zeitpunkt $t_1$ wird die Amplitude $A_M(t_1)$ abgegriffen und mit einer zeitlich um T verzögerten Amplitude $A_M(t_1+T)$ multipliziert. Diese mit der Taktfrequenz f gebildeten Produkte werden während eines gewünschten Zeitintervalls ständig aufaddiert, so daß die Produktsumme $\sum A_M(t)A_M(t+T)$ entsteht. Für die negative Amplitude der Referenzzelle verfährt man ebenso und erhält die Produktsumme $\sum A_R(t)A_R(t+T)$. Das Verhältnis dieser Resultate ist ein Maß für die relative Streulichtänderung zwischen Meß- und Referenzzelle. Die Zeitverzögerung T wird vorzugsweise so gewählt, daß die beiden Meßwerte zum Zeitpunkt $t_1$, $A_M(t_1)$ und zum Zeitpunkt $t_1+T$, $A_M(t_1+T)$, als statistisch unabhängig gelten können und sich auch Störungen der Netzfrequenz herausmitteln. Die Zeitverzögerung T kann folgendermaßen bestimmt werden.

$$T = \frac{2n+1}{100} \text{ (sec)}, \quad \text{wobei } n \geq 2 \text{ sein sollte.}$$

Durch dieses Verfahren wird der Einfluß des Rauschens im Signal $A_M(t)$ bzw. $A_R(t)$ völlig unterdrückt, da durch die Multiplikation zweier Werte zu verschiedenen Zeiten und Addition der Produkte sich der Rauschanteil herausmittelt und zwar schneller als durch einfache Mittelwertbildungen. Störeinflüsse durch die Netzfrequenz werden für bestimmte Verzögerungszeiten T ebenfalls zu Null gemittelt. Diese Auswertetechnik in Verbindung mit der differentialnephelometrischen Messung gestattet einen spezifischen Nachweis von Trübungen, z. B. von Antigen-Antikörperkomplexen besonders in Gegenwart von hohen Serumkonzentrationen bzw. von Mikroorganisman mit einer weit höheren Empfindlichkeit als mit konventionellen Nephelometern.

Die Erfindung wird durch die nachfolgenden Beispiele näher erläutert.

- : -

Beispiel 1

Bestimmung von C-reaktivem Protein (CRP)

Zur Bestimmung von CRP wird von einem CRP-Standard eine Verdünnungsreihe in CRP-freiem Serum (Schaf) hergestellt. Diese Seren werden 1 : 5 mit physiologischer Kochsalzlösung verdünnt und davon 100 μl mit 400 μl einer 1 : 40-Verdünnung (in Phosphat-gepufferter Saline) eines Antiserums gegen CRP versetzt. In der Referenzküvette werden statt des Antiserums gegen CRP 400 μl einer 1 : 40-Verdünnung eines normalen Serums (Kaninchen) eingesetzt. Die Küvetten werden 30 Minuten bei 37 °C inkubiert und anschließend gemessen.

Wie die nachstehende Tabelle zeigt, wird mit der erfindungsgemäßen Vorrichtung eine hervorragende Empfindlichkeit erzielt.

| Konzentration von CRP im Serum [μg/ml] | Relatives Streulichtsignal [willkürliche Einheiten] |
|---|---|
| 10 | 199,22 |
| 5 | 104,72 |
| 2,5 | 50,17 |
| 1,25 | 22,43 |
| 0,625 | 13,21 |
| 0,312 | 5,02 |
| 0,156 | 2,51 |
| 0,078 | 1,58 |
| 0,039 | 0,53 |
| 0,019 | 0,26 |

- 1/ -

Beispiel 2

Bestimmung von Phenytoin

600 µl Verdünnungspuffer werden mit 50 µl Phenytoin-Konjugat, 50 µl Humanserum, 50 µl einer Verdünnung des Pheny-
toin-Standards in einen Verdünnungspuffer und 50 µl Antiserum versetzt.

Der Referenzansatz enthält statt der 50 µl einer Pheny-
toin-Verdünnung 50 µl Verdünnungspuffer. Es wird 12 Minuten bei Raumtemperatur inkubiert und das resultierende
relative Streulichtsignal gemessen. Die nachstehende
Tabelle zeigt die extreme Empfindlichkeit des neuen
Verfahrens.

| Konzentration von Phenytoin im Serum [ng/ml] | Relatives Streulichtsignal [willkürliche Einheiten] |
|---|---|
| 3 600 | 87,09 |
| 600 | 52,48 |
| 100 | 33,11 |
| 16,7 | 18,19 |
| 2,78 | 6,02 |

Beispiel 3

Empfindlichkeitsprüfung von Bakterien gegen Antibiotika

Eine einzelne etwa 0,5 mm große Kolonie von Escherichia
coli auf Mac Conkey-Agar wird in 10 ml Standard-I-Nährbouillon suspendiert; der Keimgehalt beträgt etwa $10^4$
Bakterien/ml. Jeweils 1 ml der Bakteriensuspension wird
in die Meßzellen gegeben, die verschiedene Konzentrationen an Ampicillin enthalten (0,1 - 0,5 - 1 - 5 - 10 -
20 - 50 µg/ml). Die Referenzzelle enthält ebenfalls 1 ml
Bakteriensuspension, allerdings ohne Antibiotikum.

Die Referenzzelle sowie die Meßzellen werden bei 37$^{o}$ C bebrütet.

Bereits nach 30-60 min kann in den Meßzellen mit 5, 10, 20 bzw. 50 µg/ml Ampicillin eine signifikant geringere Streulichtintensität nachgewiesen werden als in der Referenzzelle; das Wachstum der Bakterien wird somit bei Ampicillinkonzentrationen $\geq$ 5 µg/ml gehemmt.

Beispiel 4

Nachweis von Bakterien

Eine Kultur von Escherichia coli in Standard-I-Nährbouillon mit $10^9$ Keimen/ml wird in 1/10-Verdünnungsschritten bis auf 10 Keime/ml verdünnt. Jeweils 1 ml der verschieden konzentrierten Bakteriensuspensionen werden in die Meßzellen gegeben. Die Referenzzelle enthält sterile Standard-I-Nährbouillon. Die Referenzzellen sowie die Meßzellen werden bei 37$^{o}$C bebrütet.

Bei einem Keimgehalt der Bakteriensuspension von $10^4$ Keimen/ml kann reproduzierbar ein signifikanter Unterschied der Streulichtintensität von Meßzelle zu Referenzzelle gemessen werden.

Bei einem Keimgehalt der Bakteriensuspension von 10 Keimen/ml und einer Generationszeit von etwa 20 min kann nach etwa 3,5 Stunden Bebrütungszeit, d.h. bei etwa $10^4$ Keimen/ml, ein signifikantes Meßsignal erfaßt werden.

- 1 -

Merck Patent Gesellschaft
mit beschränkter Haftung
D a r m s t a d t


Verfahren und Vorrichtung zur Bestimmung von
Trübungen in Flüssigkeiten


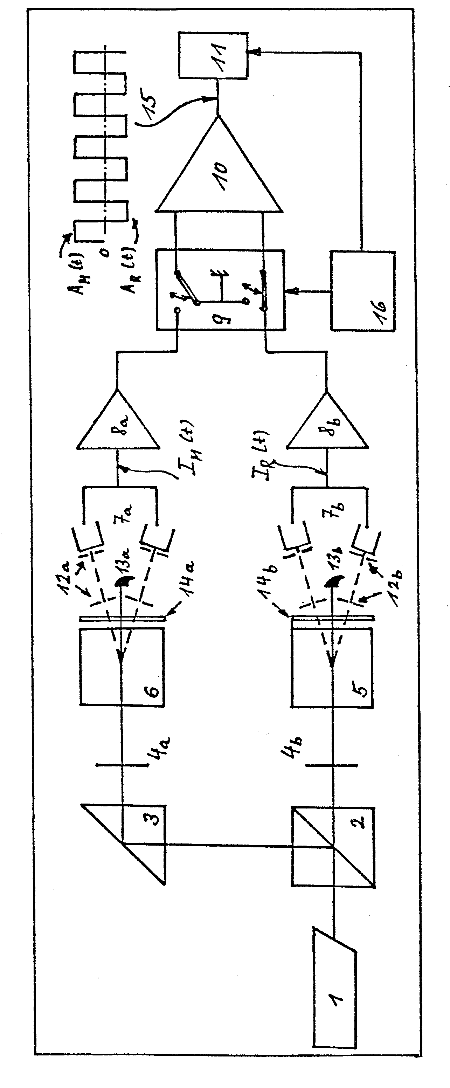

Patentansprüche:

1. Verfahren zur Bestimmung von Trübungen in Flüssigkeiten durch Bestrahlen der Flüssigkeit mit elektromagnetischer Strahlung und Messung der Streulichtintensität, dadurch gekennzeichnet, daß man die
   Streulichtintensitäten aus einer Meß- und Referenzzelle alternierend und mit umgekehrten Vorzeichen
   in ein Rechteck-Analogsignal der Frequenz f zusammenfaßt, mit der n-fachen Frequenz von f abtastet und die Differenz der Produktsummen von
   Stützzellen dieser Zeitreihe im Takt der Frequenz f
   und dem Zeitabstand T bildet.

2. Verfahren nach Anspruch 1, dadurch gekennzeichnet,
   daß das Rechteck-Analogsignal mit der Frequenz 2 f
   abgetastet wird.

3. Verfahren nach den Ansprüchen 1 und 2, dadurch gekennzeichnet, daß die Streulichtintensitäten aus
   Meß- und Referenzzelle bei je zwei zum einfallenden
   Licht gleichen Winkeln von entgegengesetztem Vorzeichen gemessen werden.


GSPHA33 C-e

4.  Verfahren nach den Ansprüchen 1 - 3, dadurch gekennzeichnet, daß die zu bestimmenden Trübungen durch
    Antigen-Antikörperkomplexe oder Mikroorganismen
    hervorgerufen sind.

5.  Verfahren nach den Ansprüchen 1 - 4, dadurch gekennzeichnet, daß zur Bestimmung der wahren Antigen-
    konzentration in der Referenzzelle unterschiedliche
    Konzentrationsverhältnisse zwischen Antigen und
    Antikörper eingestellt werden.

6.  Verfahren nach den Ansprüchen 1 - 5, dadurch gekennzeichnet, daß Meß- und Referenzzelle bei gleichen
    oder verschiedenen Temperaturen thermostatisiert
    werden können.

7.  Verfahren nach den Ansprüchen 1 - 6, dadurch gekennzeichnet, daß Mikroorganismen über das Wachstum in
    Gegenwart oder Abwesenheit von Hemm- oder Wuchsstoffen charakterisiert werden.

8.  Vorrichtung zur Durchführung des Verfahrens nach den
    Ansprüchen 1 - 7, gekennzeichnet durch eine Lichtquelle (1), die mittels eines Strahlenteilers (2)
    und eines Prismas (3) zwei identische Teilstrahlen
    erzeugt, die durch die Sammeloptik (4a, 4b) gebündelt und auf eine Meß- und Referenzzelle (5, 6)
    projiziert werden und zwei Photodetektoreinrichtungen (7a, 7b), die die von der Meß- bzw. Referenzzelle (5, 6) ausgehenden Streulichtintensitäten
    unter einem Winkel zum einfallenden Licht messen,
    wobei die Signale der Photodetektoreinrichtungen
    (7a, 7b) über einen Analogschalter (9) einem
    Differenzverstärker (10) zugeführt und in einer
    Einrichtung (11) ausgewertet werden.

GSPHA33 C-e

0118823

9.  Vorrichtung nach Anspruch 8, dadurch gekennzeichnet, daß mehrere Photodetektoreinrichtungen unter gleichem Raumwinkel bezüglich der einfallenden Lichtstrahlen zur Erfassung der Streulichtintensitäten vorhanden sind.

10. Vorrichtung nach den Ansprüchen 8 und 9, dadurch gekennzeichnet, daß Meß- und Referenzzelle (5,6) unabhängig voneinander thermostatisierbar sind.

GSPHA33 C-e